# EUROPEAN PATENT SPECIFICATION

(11) **EP 4 411 941 B1**
(45) Date of publication and mention of the grant of the patent: **13.08.2025**
(21) Application number: 23219347.4
(22) Date of filing: 21.12.2023
(51) Int. Cl.: H01M 10/658, H01M 50/209, H01M 50/289, H01M 50/291, H01M 50/293

(54) **BATTERY ASSEMBLY AND METHOD OF MANUFACTURING SAME**
BATTERIEANORDNUNG UND VERFAHREN ZUR HERSTELLUNG DAVON
ENSEMBLE BATTERIE ET SON PROCÉDÉ DE FABRICATION

(30) Priority: 31.01.2023 JP 2023012614
(43) Date of publication of application: 07.08.2024
(73) Proprietor: Prime Planet Energy & Solutions, Inc., Chuo-ku Tokyo 103-0022 (JP)
(72) Inventor: OMURA, Tetsuji, Tokyo, 103-0022 (JP); IWATA, Ryosuke, Tokyo, 103-0022 (JP); MATSUTA, Shigeki, Tokyo, 103-0022 (JP)
(74) Representative: Kuhnen & Wacker Patent- und Rechtsanwaltsbüro PartG mbB

(56) References cited:
- WO-A1-2020/054228
- US-A1- 2021 296 639

## Description

### CROSS REFERENCE TO RELATED APPLICATIONS

This application is based on Japanese Patent Application No. 2023-012614 filed on January 31, 2023 with the Japan Patent Office.

### BACKGROUND OF THE INVENTION

### Field of the Invention

The present technology relates to a battery assembly and a method of manufacturing the battery assembly.

### Description of the Background Art

In Chinese Utility Model No. 215119123, a structure in which a heat insulating material and an elastic body are placed on each other is disclosed as a structure of a separator disposed between a plurality of battery cells.

Japanese Patent Laying-Open No. 2021-150079, forming the basis for the preamble of claim 1, discloses an elastic body in which a hard portion protrudes from a through hole of a soft portion. As can be also seen from its family member US 2021/296639 A1 the secondary battery module includes a nonaqueous electrolyte secondary battery and an elastic body. The elastic body has a compressive elastic modulus of 5 MPa to 120 MPa. The nonaqueous electrolyte secondary battery includes a positive electrode and a negative electrode. The positive electrode includes a positive electrode collector containing Ti as a main component and having a thickness of 1 µm to 8 µm. The negative electrode includes a first layer and a second layer sequentially formed from a side with the negative electrode collector. The first layer contains negative electrode active material particles containing first carbon-based active material particles with a 10% proof stress of 3 MPa or less. The second layer contains negative electrode active material particles containing second carbon-based active material particles with a 10% proof stress of 5 MPa or greater.

In addition, patent document WO 2020/054228 A1 discloses a power supply device comprising a plurality of battery cells configured so that the external shape thereof is rectangular, a plurality of separators for insulating adjacent battery cells, and a restriction member for assembling the plurality of battery cells and the plurality of separators. Each of the separators includes a sandwiched plate part disposed between adjacent battery cells, at least one sheet-form insulation member disposed between the sandwiched plate part and the adjacent battery cell, and a peripheral wall that projects from the sandwiched plate part toward the adjacent battery cell. In addition, each of the battery cells is fitted into a space partitioned by the peripheral wall so that each of the separators restricts relative displacement between adjacent battery cells.

### SUMMARY OF THE INVENTION

Since the separator described in Chinese Utility Model No. 215119123 employs the two-layer structure with the heat insulating material and the elastic body, a total of a tolerance of the thickness of the heat insulating material and a tolerance of the thickness of the elastic body is a tolerance of the thickness of the separator.

Therefore, the tolerance of the thickness of the separator tends to be larger than that of a separator constituted of one member. When the thickness of the separator is large, a restraint load on battery cells become large even though design values of sizes of the battery cells in a stacking direction are the same. When the maximum value of the restraint load on the battery cells becomes large, strength of a strength member in the battery module needs to be improved, which can lead to increased weight and increased cost of the battery module.

In the elastic body described in Japanese Patent Laying-Open No. 2021-150079, and family member US 2021/296639 A1, the soft portion is normally separated from an electrode assembly in a state in which it is incorporated in a secondary battery module. Further, since the hard portions interspersed in the elastic body are likely to be deformed, it is considered that a load is received from the electrode assembly.

It is an object of the present technology to provide: a battery assembly in which variation in reaction force acting on a battery cell is small; and a method of manufacturing the battery assembly.

The above object is solved by the subject-matters of claims 1 and 5. Further advantageous configurations of the invention can be drawn from the dependent claims.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view of a battery assembly.
Fig. 2 is a perspective view of a battery cell.
Fig. 3 is a perspective view of a battery module.
Fig. 4 is a cross sectional view of a separator included in the battery assembly.
Fig. 5 is a diagram showing a state in which the separator shown in Fig. 4 is disposed between battery cells.
Fig. 6 is a top view of a first member of the separator.
Fig. 7 is a top view of a second member of the separator.
Fig. 8 is a cross sectional view of a separator according to a comparative example.
Fig. 9 is a diagram showing a state in which the separator shown in Fig. 8 is disposed between battery cells.
Fig. 10 is a top view of a separator according to a modification.
Fig. 11 is a cross sectional view along XI-XI in Fig. 10.
Fig. 12 is a diagram showing deformation when a load is applied to the first member of the separator.
Fig. 13 is a diagram showing deformation when a load is applied to the second member of the separator.
Fig. 14 is a graph showing an exemplary load-thickness curve of each of the first member and the second member in the separator.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

In the present specification, the term "battery" is not limited to a lithium ion battery, and may include other batteries such as a nickel-metal hydride battery and a sodium ion battery.

In the present specification, the term "battery cell" is not necessarily limited to a prismatic battery cell and may include a cell having another shape, such as a cylindrical battery cell, a pouch battery cell, or a blade battery cell. Further, the "battery cell" can be mounted on vehicles such as a hybrid electric vehicle (HEV), a plug-in hybrid electric vehicle (PHEV), and a battery electric vehicle (BEV). It should be noted that the use of the "battery cell" is not limited to the use in a vehicle.

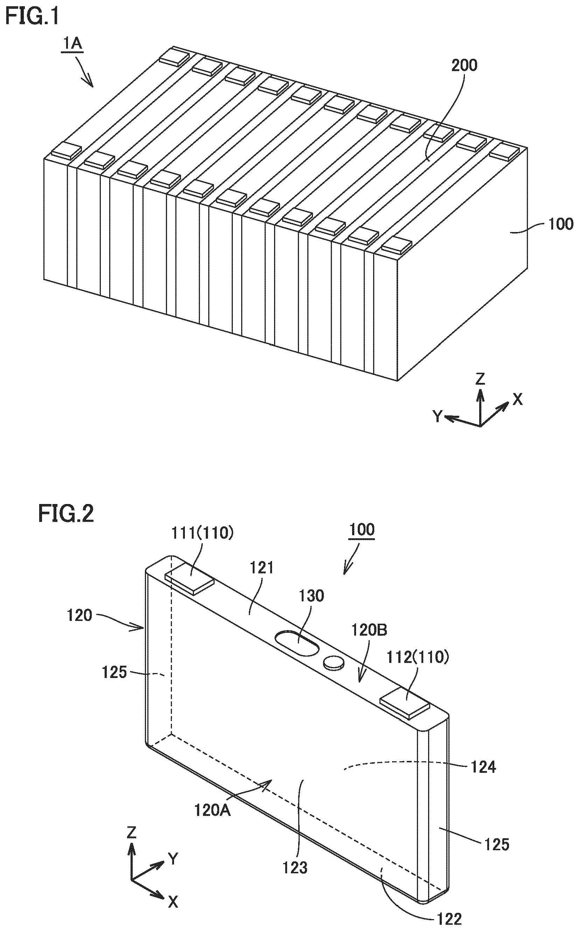

Fig. 1 is a perspective view of a battery assembly 1A. Battery assembly 1A shown in Fig. 1 includes battery cells 100 and separators 200 (inter-cell separator). Battery cells 100 and separators 200 are alternately arranged along a Y axis direction (first direction).

The plurality of battery cells 100 are battery cells each having a prismatic shape, and are provided along the Y axis direction. The plurality of battery cells 100 are electrically connected together by a bus bar (not shown).

Separators 200 are provided between the plurality of battery cells 100. Each of separators 200 prevents unintended electrical conduction between adjacent battery cells 100. Separator 200 secures an electrical insulation property between adjacent battery cells 100.

Fig. 2 is a perspective view of each battery cell 100. As shown in Fig. 2, battery cell 100 has a prismatic shape. Battery cell 100 has electrode terminals 110, a battery case 120, and a gas-discharge valve 130.

Electrode terminal 110 is formed on battery case 120. Electrode terminals 110 have a positive electrode terminal 111 and a negative electrode terminal 112 arranged side by side along an X axis direction (second direction) orthogonal to the Y axis direction (first direction). Positive electrode terminal 111 and negative electrode terminal 112 are provided to be separated from each other in the X axis direction.

Battery case 120 has a rectangular parallelepiped shape and forms an external appearance of battery cell 100. Battery case 120 includes: a case main body 120A that accommodates an electrode assembly (not shown) and an electrolyte solution (not shown); and a sealing plate 120B that seals an opening of case main body 120A. Sealing plate 120B is joined to case main body 120A by welding.

Battery case 120 has an upper surface 121, a lower surface 122, a first side surface 123, a second side surface 124, and two third side surfaces 125.

Upper surface 121 is a flat surface orthogonal to a Z axis direction (third direction) orthogonal to the Y axis direction and the X axis direction. Electrode terminals 110 are disposed on upper surface 121. Lower surface 122 faces upper surface 121 along the Z axis direction.

Each of first side surface 123 and second side surface 124 is constituted of a flat surface orthogonal to the Y axis direction. Each of first side surface 123 and second side surface 124 has the largest area among the areas of the plurality of side surfaces of battery case 120. Each of first side surface 123 and second side surface 124 has a rectangular shape when viewed in the Y axis direction. Each of first side surface 123 and second side surface 124 has a rectangular shape in which the X axis direction corresponds to the long-side direction and the Z axis direction corresponds to the short-side direction when viewed in the Y axis direction.

The plurality of battery cells 100 are stacked such that first side surfaces 123 of battery cells 100, 100 adjacent to each other in the Y direction face each other and second side surfaces 124 of battery cells 100, 100 adjacent to each other in the Y axis direction face each other. Thus, positive electrode terminals 111 and negative electrode terminals 112 are alternately arranged in the Y axis direction in which the plurality of battery cells 100 are stacked.

Gas-discharge valve 130 is provided in upper surface 121. When the temperature of battery cell 100 is increased (thermal runaway) and internal pressure of battery case 120 becomes more than or equal to a predetermined value due to gas generated inside battery case 120, gas-discharge valve 130 discharges the gas to outside of battery case 120.

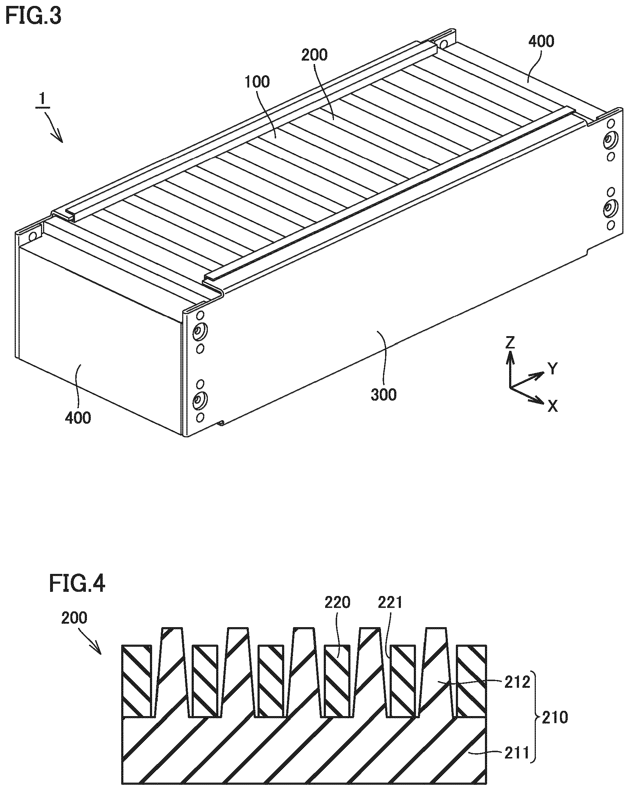

Fig. 3 is a perspective view of battery module 1. As shown in Fig. 3, battery module 1 includes battery cells 100, separators 200, restraint members 300, and end plates 400.

Battery cells 100 and separators 200 alternately arranged along the Y axis direction (first direction) are pressed by end plates 400 and are restrained between two end plates 400.

End plates 400 are disposed at both ends in the Y axis direction. Each of end plates 400 is fixed to a base such as a case that accommodates battery module 1. Restraint member 300 connects two end plates 400 to each other to restrain the plurality of battery cells 100 and separators 200 along the Y axis direction.

Restraint member 300 is fixed to end plates 400 with a compression force in the Y axis direction being exerted to the stack of battery cells 100, separators 200 and end plates 400, and then the compression force is released, with the result that tensile force acts on restraint member 300 that connects two end plates 400 to each other. As a reaction thereto, restraint members 300 press two end plates 400 in directions of bringing them closer to each other. In this way, battery module 1 is constructed.

By accommodating battery module 1 in a pack case, a battery pack is formed (cell-module-pack structure). Instead of this, a structure (cell-to-pack structure) may be employed in which battery assembly 1A shown in Fig. 1 is directly supported by a wall surface of the pack case.

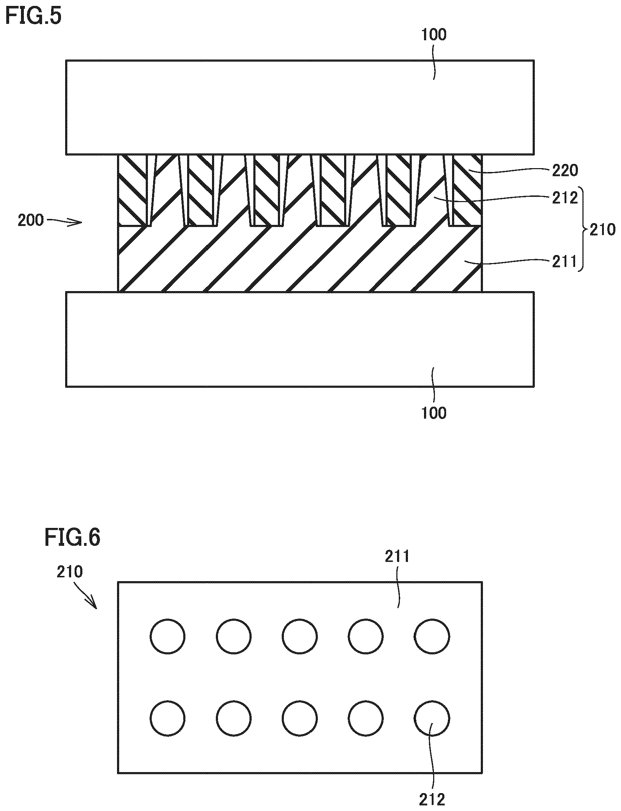

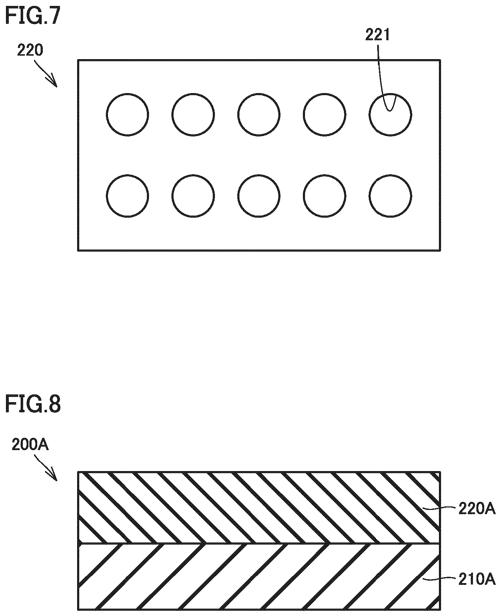

Fig. 4 is a cross sectional view of each separator 200. Fig. 5 is a diagram showing a state in which separator 200 shown in Fig. 4 is disposed between battery cells 100. Fig. 6 is a top view of a first member 210, and Fig. 7 is a top view of a second member 220.

As shown in Figs. 4 to 7, separator 200 includes first member 210 and second member 220. First member 210 and second member 220 are placed on each other in the stacking direction (Y axis direction) of the plurality of battery cells 100.

First member 210 includes a base portion 211 and a plurality of protrusions 212 protruding from base portion 211 in the Y axis direction. Each of protrusions 212 has a tapered shape having a diameter that is decreased toward its tip. In the example of Fig. 4, base portion 211 and the plurality of protrusions 212 are integrally molded, but base portion 211 and protrusions 212 provided as separate members may be joined together.

Second member 220 is provided with hole portions 221. Protrusions 212 of first member 210 are inserted into hole portions 221 of second member 220. As a result, second member 220 is located between the plurality of protrusions 212. As an example, the outer size of first member 210 and the outer size of second member 220 are substantially equal to each other.

Typically, as shown in Fig. 4, in a state in which separator 200 is detached from battery assembly 1A, a protruding height of each of the plurality of protrusions 212 is larger than a thickness of second member 220. After separators 200 each shown in Fig. 4 are prepared, the plurality of battery cells 100 and separators 200 are alternately arranged in the Y axis direction and are restrained along the Y axis direction. On this occasion, as shown in Fig. 5, protrusions 212 of first member 210 are compressed together with second member 220.

First member 210 is an elastic body. First member 210 can be composed of, for example, a silicone rubber, a fluororubber, a urethane rubber, a natural rubber, a styrene-butadiene rubber, a butyl rubber, an ethylene propylene rubber (EPM, EPDM), a butadiene rubber, an isoprene rubber, a norbornene rubber, or the like (is preferably composed of the silicone rubber or fluororubber).

In any case, first member 210 is composed of a material having an elastic modulus of about 1 MPa or more and 10 MPa or less as measured by the following method.

### [Method of Measuring Elastic Modulus]

(1) A square test piece having each side of 5 cm (surface facing the battery cell) is prepared.
(2) For the test piece, a load displacement curve (F-S curve) is obtained up to a pressure application force of 3.9 MPa (pressure application rate: 30 N/min).
(3) In a graph in which the horizontal axis represents a compression ratio and the vertical axis represents a pressure, the elastic modulus is calculated from the slope of a compression ratio of 1% to 20%.

Further, it is preferable to form first member 210 using such a material that a sample thickness measured by a micrometer with resting of two hours after the pressure application test (after unloading) is about -20% or less from an initial state (before the pressure application test).

Second member 220 has such a property that second member 220 has a higher heat insulation property than that of first member 210 and is more likely to be deformed than first member 210.

Second member 220 can be composed of a foamed resin. Second member 220 can be composed of, for example, an inorganic fiber (ceramic fiber or the like), a molding of an inorganic fiber and an organic binder, an inorganic filler and an organic binder, a foamed silicon sheet having a space therein, or the like.

Second member 220 preferably has a heat insulation property of about 0.15 W/mK or less, and more preferably has a heat insulation property of about 0.1 W/mK or less.

As shown in Figs. 4 to 7, since separator 200 has the two-layer structure with first member 210 having a higher elastic modulus and second member 220 having a higher heat insulation property, both deformation absorption property and heat insulation property in separator 200 can be achieved.

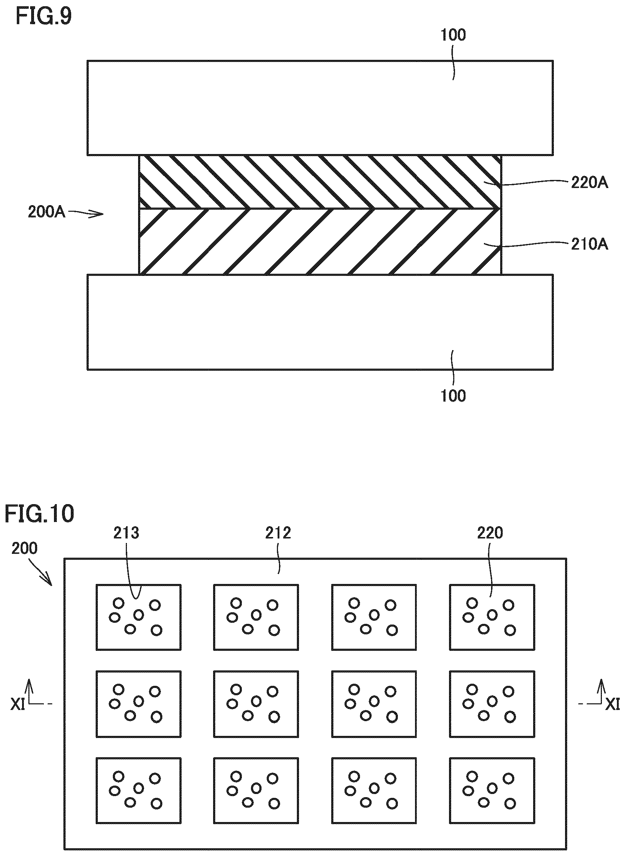

Fig. 8 is a cross sectional view of a separator 200A according to a comparative example. Fig. 9 is a diagram showing a state in which separator 200A shown in Fig. 8 is disposed between battery cells 100.

In separator 200A shown in Figs. 8 and 9, a two-layer structure is disclosed in which a first member 210A having a higher elastic modulus and a second member 220A having a higher heat insulation property are placed on each other.

Since separator 200A employs the two-layer structure with first member 210A and second member 220A, a total of a tolerance of the thickness of first member 210A and a tolerance of the thickness of second member 220A is a tolerance of the thickness of separator 200A.

Thus, with the total of the tolerances of the thicknesses of the two members, the tolerance of the thickness of the separator becomes larger than that of a separator constituted of one member. As a result, a restraint load on battery cells 100 and separator 200A becomes large depending on the thickness of separator 200A even though design values of sizes of battery cells 100 in the stacking direction (Y axis direction) are the same. As a result, strength of a strength member in battery assembly 1A or battery module 1 needs to be improved, which can lead to increased weight and increased cost of battery module 1.

On the other hand, in separator 200 according to the present embodiment, since the structure is employed in which second member 220 is provided between protrusions 212 of first member 210, only the size tolerance of first member 210 of first member 210 and second member 220 needs to be managed, with the result that variation in the thickness of separator 200 becomes small as a whole. As a result, battery module 1 in which variation in reaction force acting on battery cell 100 is small is provided, thus contributing to reduced weight or reduced manufacturing cost of the battery module.

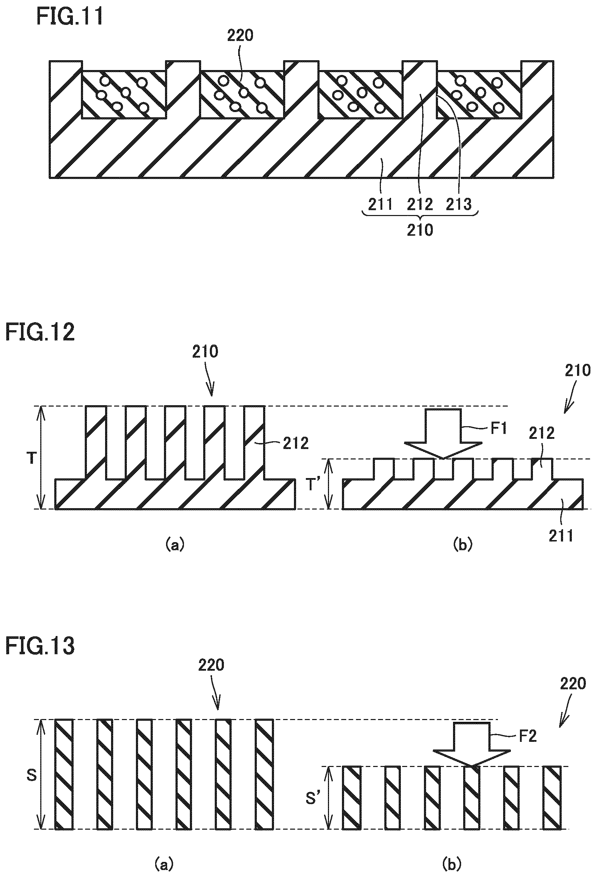

Fig. 10 is a top view of a separator 200 according to a modification. Fig. 11 is a cross sectional view along XI-XI in Fig. 10.

In the modification shown in Figs. 10 and 11, a foam having an air layer therein is used as each second member 220. When preparing separator 200, a resin is foamed in a recess 213 surrounded by a series of protrusions 212 of first member 210. As a result, second member 220 composed of the foamed resin is formed between the plurality of protrusions 212 of first member 210.

Next, a relation between the elastic modulus of first member 210 and the elastic modulus of second member 220 will be described with reference to Figs. 12 to 14.

Fig. 12 is a diagram showing deformation when a load is applied to first member 210 of separator 200. Fig. 13 is a diagram showing deformation when a load is applied to second member 220 of separator 200.

As shown in Fig. 12, when first member 210 having a thickness T under application of no load is fed with a load F1, protrusions 212 are mainly compressed and deformed, with the result that the thickness of first member 210 is decreased to T'.

As shown in Fig. 13, when second member 220 having a thickness S under application of no load is fed with a load F2, second member 220 is compressed and deformed, with the result that the thickness of second member 220 is decreased to S'.

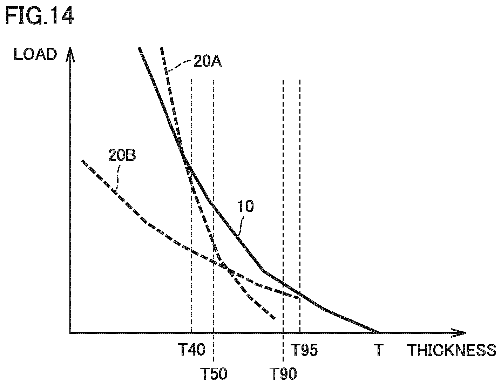

Fig. 14 is a graph showing an exemplary load-thickness curve of each of first member 210 and second member 220 in separator 200. In Fig. 14, a curve 10 is an exemplary load-thickness curve of first member 210 in separator 200, and each of curves 20A, 20B is an exemplary load-thickness curve of second member 220 in separator 200. In Fig. 14, the vertical axis represents a load acting on each of first member 210 and the second member in separator 200, and the horizontal axis represents the thickness of separator 200 (first member 210).

As indicated by curves 10, 20A, 20B in Fig. 14, each of the loads acting on first member 210 and second member 220 in separator 200 is increased as the thickness of separator 200 (first member 210) is decreased.

According to the invention, the load (elastic force of first member 210) acting on first member 210 is larger than the load (elastic force of second member 220) acting on second member 220 in a region (region of T50 to T90 in Fig. 14) in which at least the thickness of separator 200 (first member 210) is 50% to 90% of thickness T that is under application of no load (the same applies to each example of curves 20A, 20B). More preferably, the load (elastic force of first member 210) acting on first member 210 is larger than the load (elastic force of second member 220) acting on second member 220 in a region (region of T40 to T95 in Fig. 14) in which at least the thickness of separator 200 (first member 210) is 40% to 95% of thickness T that is under application of no load (the same applies to each example of curves 20A, 20B).

In this way, second member 220 can be provided so as not to affect the deformation absorption property of first member 210 excessively within a practical use range of separator 200.

Although the embodiments of the present invention have been described and illustrated in detail, the scope of the present invention is defined by the appended

## Claims

1. A battery assembly comprising:
a plurality of battery cells (100) arranged in a first direction (Y);
a separator (200) disposed between the plurality of battery cells (100); and
a restraint member (300) that restrains the plurality of battery cells (100) and the separator (200) along the first direction (Y), wherein:
- the separator (200) includes
a first member (210) including a base portion (211) and a plurality of protrusions (212) each protruding from the base portion (211) in the first direction (Y), and
a second member (220) disposed between the plurality of protrusions (212), the second member (220) having a higher heat insulation property than a heat insulation property of the first member (210),
- -in a state in which the separator (200) is detached from the battery assembly (1), a protruding height of each of the plurality of protrusions (212) is larger than a thickness of the second member (220),
**characterised in that** the first member (210) and the second member (220) are selected such that:
- the first member (210) is composed of a material having an elastic modulus of about 1 MPa or more and 10 MPa or less,
- the second member (220) has a lower elastic modulus than the first member (210), and
- when a load is applied to the separator (200) and its thickness is reduced to between 50% and 90% of its thickness (T) in an unloaded state, the separator (200) undergoes elastic deformation, and the load acting on the first member (210) is greater than the load acting on the second member (220).

2. The battery assembly according to claim 1, wherein in the directions (X, Z) perpendicular to the first direction (Y), an outer size of the first member (210) and an outer size of the second member (220) are substantially equal.

3. The battery assembly according to claim 1 or 2, wherein the base portion (211) of the first member (210) and the plurality of protrusions (212) are integrally molded.

4. The battery assembly according to any one of claims 1 to 3, wherein the second member (220) is composed of a foamed resin.

5. A method of manufacturing a battery assembly, the method comprising:
preparing a plurality of battery cells (100) and a separator (200);
arranging the plurality of battery cells (100) and the separator (200) alternately in a first direction (Y); and
restraining the plurality of battery cells (100) and the separator (200) along the first direction (Y), wherein
the separator (200) is the separator (200) defined in the battery assembly claim 1.

6. The method of manufacturing the battery assembly according to claim 5, wherein the preparing of the separator (200) includes disposing the second member (220) composed of a foamed resin between the plurality of protrusions (212) of the first member (210) by foaming a resin in a recess (213) surrounded by a series of the protrusions (212) of the first member (210).

## Patentansprüche

1. Batterieanordnung, aufweisend:
eine Mehrzahl von Batteriezellen (100), welcher in einer ersten Richtung (Y) angeordnet sind;
einen Separator (200), welcher zwischen der Mehrzahl von Batteriezellen (100) angeordnet ist; und
ein Halteelement (300), welches die Mehrzahl von Batteriezellen (100) und den Separator (200) entlang der ersten Richtung (Y) hält, wobei:
- der Separator (200) beinhaltet:
ein erstes Element (210), welches einen Basisabschnitt (211) und eine Mehrzahl von Vorsprüngen (212), welche jeweils von dem Basisabschnitt (211) in der ersten Richtung (Y) vorstehen, beinhaltet, und
ein zweites Element (220), welches zwischen der Mehrzahl von Vorsprüngen (212) angeordnet ist, wobei das zweite Element (220) eine höhere Wärmeisoliereigenschaft als eine Wärmeisoliereigenschaft des ersten Elements (210) aufweist,
- in einem Zustand, in welchem der Separator (200) von der Batterieanordnung (1) losgelöst ist, eine vorstehende Höhe von jedem von der Mehrzahl von Vorsprüngen (212) größer ist als eine Dicke des zweiten Elements (220),
**dadurch gekennzeichnet, dass** das erste Element (210) und das zweite Element (220) derart ausgewählt sind, dass:
- das erste Element (210) aus einem Material mit einem Elastizitätsmodul von etwa 1 MPa oder mehr und 10 MPa oder weniger aufgebaut ist, und
- das zweite Element (220) einen niedrigeren Elastizitätsmodul als das erste Element (210) aufweist, und
- wenn auf den Separator (200) eine Last ausgeübt wird und dessen Dicke auf einen Wert zwischen 50% und 90% seiner Dicke (T) in einem unbelasteten Zustand reduziert wird, der Separator (200) einer elastischen Verformung ausgesetzt ist, und die Last, welche auf das erste Element (210) ausgeübt wird, größer ist als die auf das zweite Element (220) ausgeübte Last.

2. Batterieanordnung nach Anspruch 1, wobei in den Richtungen (X, Z) senkrecht zu der ersten Richtung (Y), eine äußere Abmessung des ersten Elements (210) und eine äußere Abmessung des zweiten Elements (220) im Wesentlichen gleich sind.

3. Batterieanordnung nach Anspruch 1 oder 2, wobei der Basisabschnitt (211) des ersten Elements (210) und die Mehrzahl von Vorsprüngen (212) einstückig geformt sind.

4. Batterieanordnung nach einem der Ansprüche 1 bis 3, wobei das zweite Element (220) aus einem Schaumharz aufgebaut ist.

5. Verfahren zur Herstellung einer Batterieanordnung, wobei das Verfahren beinhaltet:
Vorbereiten einer Mehrzahl von Batteriezellen (100) und eines Separators (200);
alternierendes Anordnen der Mehrzahl von Batteriezellen (100) und des Separators (200) in einer ersten Richtung (Y); und
Halten der Mehrzahl von Batteriezellen (100) und des Separators (200) entlang der ersten Richtung (Y), wobei
der Separator (200) der in der Batterieanordnung nach Anspruch 1 definierte Separator (200) ist.

6. Verfahren zur Herstellung der Batterieanordnung nach Anspruch 5, wobei das Vorbereiten des Separators (200) ein Anordnen des zweiten Elements (220), welches aus einem Schaumharz aufgebaut ist, zwischen der Mehrzahl von Vorsprüngen (212) des ersten Elements (210) beinhaltet, indem ein Harz in eine Ausnehmung (213), welche von einer Reihe der Vorsprünge (212) des ersten Elements (210) umgeben ist, geschäumt wird.

## Revendications

1. Ensemble de batterie comprenant :
une pluralité de cellules de batterie (100) disposées dans une première direction (Y) ;
un séparateur (200) disposé entre la pluralité de cellules de batterie (100) ; et
un élément de retenue (300) qui retient la pluralité de cellules de batterie (100) et le séparateur (200) le long de la première direction (Y), dans lequel :
le séparateur (200) comprend
un premier élément (210) comprenant une partie de base (211) et une pluralité de saillies (212) faisant chacune saillie à partir de la partie de base (211) dans la première direction (Y), et
un deuxième élément (220) disposé entre la pluralité de saillies (212), le deuxième élément (220) ayant une propriété d'isolation thermique supérieure à une propriété d'isolation thermique du premier élément (210),
dans un état dans lequel le séparateur (200) est détaché de l'ensemble de batterie (1), une hauteur en saillie de chacune de la pluralité de saillies (212) est supérieure à une épaisseur du deuxième élément (220),
**caractérisé en ce que** :
- le premier élément (210) est composé d'un matériau ayant un module d'élasticité d'environ 1 MPa ou plus et 10 MPa ou moins,
- le deuxième élément (220) a un module d'élasticité inférieur à celui du premier élément (210), et
- lorsqu'une charge est appliquée au séparateur (200) et que son épaisseur est réduite à entre 50 % et 90 % de son épaisseur (T) à l'état non chargé, le séparateur (200) subit une déformation élastique, et la charge agissant sur le premier élément (210) est supérieure à la charge agissant sur le deuxième élément (220).

2. L'ensemble de batterie selon la revendication 1, dans lequel, dans les directions (X, Z) perpendiculaires à la première direction (Y), une dimension extérieure du premier élément (210) et une dimension extérieure du deuxième élément (220) sont sensiblement égales.

3. L'ensemble de batterie selon la revendication 1 ou 2, dans lequel la partie de base (211) du premier élément (210) et la pluralité de saillies (212) sont moulées d'un seul tenant.

4. L'ensemble de batterie selon l'une des revendications 1 à 3, dans lequel le deuxième élément (220) est composé d'une résine expansée.

5. Procédé de fabrication d'un ensemble de batterie, le procédé comprenant :
la préparation d'une pluralité de cellules de batterie (100) et d'un séparateur (200) ;
l'agencement de la pluralité de cellules de batterie (100) et du séparateur (200) en alternance dans une première direction (Y) ; et
maintenir la pluralité de cellules de batterie (100) et le séparateur (200) le long de la première direction (Y), dans lequel
le séparateur (200) est le séparateur (200) défini dans la revendication 1 relative à l'assemblage de batterie.

6. Le procédé de fabrication d'un ensemble de batterie selon la revendication 5, dans lequel la préparation du séparateur (200) comprend le fait de disposer le deuxième élément (220) composé d'une résine expansée entre la pluralité de saillies (212) du premier élément (210) en faisant mousser une résine dans un évidement (213) entouré par une série des saillies (212) du premier élément (210).
